# EUROPÄISCHE PATENTSCHRIFT

(11) **EP 2 497 947 B1**
(45) Veröffentlichungstag und Bekanntmachung des Hinweises auf die Patenterteilung: **26.08.2015**
(21) Anmeldenummer: 12001508.6
(22) Anmeldetag: 06.03.2012
(51) Int. Cl.: F03D 7/02, F03D 11/02

(54) **Windenergieanlage sowie Verfahren zum Beheizen einer Komponente in einer Windenergieanlage**
A wind turbine and a method for heating a component in a wind turbine
Eolienne ainsi que procédé de chauffage d'un composant dans une éolienne

(30) Priorität: 11.03.2011 DE 102011013674
(43) Veröffentlichungstag der Anmeldung: 12.09.2012
(73) Patentinhaber: Nordex Energy GmbH, 22419 Hamburg (DE)
(72) Erfinder: Dreher, Moritz, 22397 Hamburg (DE); Scheibig, Lars, 22397 Hamburg (DE); Radou, Frederic, 25486 Alveslohe (DE)
(74) Vertreter: Hauck Patentanwaltspartnerschaft mbB

(56) Entgegenhaltungen:
- EP-A2- 2 088 316
- DE-A1-102007 054 215
- US-A1- 2004 178 638

## Beschreibung

Die vorliegende Patentanmeldung betrifft eine Windenergieanlage sowie ein Verfahren zum Beheizen einer Komponente in einer Windenergieanlage.

Die vorliegende Patentanmeldung betrifft eine Windenergieanlage mit einer Gondel, in der mindestens eine Komponente mit einer Einrichtung zur Erfassung einer Temperatur der Komponente ausgestattet ist. Ebenso betrifft die vorliegende Erfindung ein Verfahren zum Beheizen einer Komponente in einer Windenergieanlage.

Aus DE 10 2007 054 215 A1 ist eine Windenergieanlage mit einer Heizeinrichtung bekannt. Die Heizeinrichtung weist einen Thermoschalter auf, der die Temperatur mindestens einer Komponente der Windenergieanlage überwacht und bei Erreichen einer Schwelltemperatur betätigt wird. Ferner ist eine Kontrolleinheit vorgesehen, die mit der Heizeinrichtung derart zusammenwirkt, dass die Kontrolleinheit die Heizeinrichtung betätigt, bis der Wärmeschalter anspricht und daraufhin ein Freigabesignal zum Hochfahren der Windenergieanlage an die Steuereinrichtung übermittelt. Hierdurch wird erreicht, dass zumindest temperaturkritische Komponenten der Windenergieanlage vor einem Hochfahren auf eine Betriebstemperatur vorgewärmt werden. Ferner ist aus diesem Dokument bekannt geworden, ein Nachheizmodul vorzusehen, das die Heizeinrichtung auch nach Erreichen der Temperaturschwelle und Ausgeben des Freigabesignals weiter betreibt, um die Temperatur weiter zu erhöhen oder den Wert der Temperatur zu stabilisieren. Das Nachheizmodul kann an einen Außentemperatursensor angeschlossen sein, um ein Nachheizen in solchen Fällen durchzuführen, in denen dies aufgrund einer besonders tiefen Außentemperatur sinnvoll und erforderlich ist.

Aus US 2010/0135793 A1 ist ein Schmiersystem für eine Windenergieanlage bekannt geworden, bei dem ein Heizsystem ausgebildet ist, um Öl abhängig von vorhergesagten Außeneinflüssen wie beispielsweise einer vorhergesagten Windgeschwindigkeit, einer vorhergesagten Außentemperatur, einem vorhergesagten Luftdruck und/oder einer vorhergesagten Luftdichte zu steuern.

Aus US 2009/0191060 A1 ist eine mit einem Getriebe versehene Windenergieanlage bekannt, bei der eine Pumpe ein zirkulierendes Schmiermedium fördert. Eine Heizeinrichtung ist vorgesehen, um das Schmiermittel in einer Förderleitung auf eine Temperatur zu erwärmen, bei der eine Beschädigung der Pumpe vermieden wird.

Aus EP 2 088 316 A2 ist ein Wärmemanagementsystem für ein Getriebe einer Windenergieanlage bekannt, bei dem die Ansaugleitung für den Schmierstoff des Getriebes von einer Heizeinrichtung umgeben ist. Temperatursensoren bestimmen die Öltemperatur in dem Getriebe, in der Saugleitung, in der Pumpe sowie die Umgebungstemperatur. Sinken die Umgebungstemperatur und die Öltemperatur unter einen vorbestimmten Wert, wird die Heizeinrichtung aktiviert.

Der Erfindung liegt die Aufgabe zugrunde, eine Windenergieanlage und ein Verfahren zum Beheizen einer Komponente einer Windenergieanlage zur Verfügung zu stellen, bei der/dem ein sicherer Betrieb der Windenergieanlage auch bei niedrigen Temperaturen mit möglichst einfachen Mitteln erfolgen kann.

Erfindungsgemäß wird die Aufgabe durch eine Windenergieanlage mit den Merkmalen des Anspruchs 1 gelöst. Ebenfalls wird die Aufgabe durch ein Verfahren mit den Merkmalen aus Anspruch 11 gelöst. Vorteilhafte Ausgestaltungen bilden den Gegenstand der Unteransprüche.

Bevorzugt besitzt eine erfindungsgemäße Windenergieanlage eine Gondel, in der mindestens eine Komponente mit einem ersten Temperatursensor zur Erfassung einer Temperatur der Komponente ausgestattet ist. Bei der Komponente kann es sich um ein elektrisches, hydraulisches oder mechanisches Bauteil oder eine ganze Einheit von Bauteilen handeln. Ferner besitzt die erfindungsgemäße Windenergieanlage einen zweiten Temperatursensor, der eine Außentemperatur innerhalb oder außerhalb der Gondel erfasst. Weiterhin ist die erfindungsgemäße Windenergieanlage mit einem Heizmittel ausgestattet, das der mindestens einen Komponente zugeordnet ist, um diese zu beheizen. Ferner ist eine Heizsteuerung vorgesehen, an der die erfasste Temperatur der Komponente und die Außentemperatur als Eingangsgrößen anliegen und die das Heizmittel für ein Heizen ansteuert, wenn die erfasste Temperatur der Komponente unterhalb eines Einschaltwerts für das Heizmittel liegt. Erfindungsgemäß ist der Einschaltwert für das Heizmittel in mindestens einem vorbestimmten Temperaturintervall abhängig von der Außentemperatur. Die Abhängigkeit des Einschaltwerts für die erfasste Außentemperatur ist dabei derart, dass der Einschaltwert bei einer ersten Außentemperatur größer als der Einschaltwert bei einer zweiten Außentemperatur ist, wenn die zweite Außentemperatur größer als die erste Außentemperatur ist.

Ein derart bestimmter Einschaltwert für das Heizmittel bewirkt, dass bei abnehmender Außentemperatur höhere Einschaltwerte für das Heizmittel vorgesehen sind. Der Erfindung liegt die Erkenntnis zugrunde, dass gerade bei niedriger Außentemperatur große Temperaturdifferenzen innerhalb der Windenergieanlage auftreten können, die für einen fortgesetzten oder wieder aufzunehmenden Betrieb schädlich sind. Üblicherweise wird bei der Überwachung einer temperaturkritischen Komponente nur auf eine Betriebstemperatur in einem bestimmten Bereich der Komponente abgestellt. Dabei kann der Fall eintreten, dass weiter von der Messstelle entfernt liegende Bereiche dieser Komponente oder benachbarte Komponenten trotz Heizung zu stark auskühlen. Im Gegensatz dazu wird bei der erfindungsgemäßen Windenergieanlage bei niedriger Außentemperatur die Heizung für die zu überwachende Komponente bei höherer Temperatur der Komponente eingeschaltet als dies bei einer höheren Außentemperatur der Fall wäre. Dadurch kann ein starkes Auskühlen von benachbarten und entfernt liegenden Bereichen der Komponente vermieden werden.

In einer bevorzugten Ausgestaltung der erfindungsgemäßen Windenergieanlage ist die Heizsteuerung derart ausgebildet, dass innerhalb des vorbestimmten Temperaturintervalls jeder Einschaltwert bei einer ersten Außentemperatur größer als jeder andere Einschaltwert bei einer zweiten Außentemperatur ist, wenn die zweite Außentemperatur größer als die erste Außentemperatur ist. Mit anderen Worten, innerhalb des vorbestimmten Temperaturintervalls liegt ein streng monotones Verhalten für den Einschaltwert abhängig von der Außentemperatur vor.

In einer bevorzugten Weiterbildung der erfindungsgemäßen Windenergieanlage schaltet die Heizsteuerung das Heizmittel aus, wenn der Wert der erfassten Temperatur der Komponente oberhalb eines vorbestimmten Abschaltwerts für das Heizmittel liegt, wobei der Abschaltwert stets größer als der Einschaltwert bei der jeweiligen Außentemperatur ist. Wird bei einer gegebenen Außentemperatur die Komponente durch das Heizmittel erwärmt, so wird das Heizmittel solange betrieben, bis die Temperatur an der zu überwachenden Komponente den Abschaltwert erreicht hat. Der Abschaltwert für das Heizmittel ist hierbei größer als der Einschaltwert für das Heizmittel. Die Heizsteuerung ist in dieser Ausgestaltung als eine Zweipunktregelung ausgebildet, die die Temperatur der Komponente auf Werte zwischen dem Einschaltwert und dem Abschaltwert regelt.

In einer bevorzugten Weiterbildung ist bei jeder Außentemperatur in dem Temperaturintervall der Abschaltwert um eine konstante Temperaturdifferenz größer als der Einschaltwert. Bevorzugt besitzt die Temperaturdifferenz einen Wert zwischen 2 K und 15 K. Dies bedeutet, dass die erfindungsgemäße Heizsteuerung, den Einschaltwert abhängig von der Außentemperatur bestimmt und der Abschaltwert um eine konstante Temperaturdifferenz größer als der entsprechend bestimmte Einschaltwert ist. Regelungstechnisch kann eine solche Heizsteuerung besonders einfach ausgebildet werden.

In einer bevorzugten Ausgestaltung ist als temperaturkritische, zu überwachende Komponente einer Windenergieanlage ein Getriebe vorgesehen. Zweckmäßigerweise erfasst der Temperaturfühler für die Komponente die Temperatur eines Schmiermittels in dem Getriebe. Hierzu kann der Temperaturfühler beispielsweise in einem Ölsumpf oder an einer Wanne für den Ölsumpf angeordnet sein. Da bei der erfindungsgemäßen Windenergieanlage mit fallenden Außentemperaturen der Einschaltwert für das Heizmittel steigt, ist es ausreichend, nur genau einen Temperaturfühler für die Komponente vorzusehen.

In einer bevorzugten Ausgestaltung erstreckt sich das Intervall für die Außentemperatur bis zu Temperaturen von -30° C, bevorzugt bis zu -50° C. Der obere Wert des Temperaturintervalls kann je nach Standort und/oder Auslegung der Windenergieanlage geeignet gewählt werden. Geeignet ist für Standorte mit besonders niedriger Außentemperatur ein Temperaturintervall, das sich bis -40° C erstreckt.

In einer bevorzugten Ausgestaltung der erfindungsgemäßen Windenergieanlage besitzt die Einschalttemperatur einen Maximalwert, der sich bis 30° C, bevorzugt bis 50° C erstreckt. Geeignet ist auch ein maximaler Einschaltwert von 40° C. Der maximale Einschaltwert ist der Einschaltwert, der bei der niedrigsten Außentemperatur des Temperaturintervalls vorliegt.

Die erfindungsgemäße Aufgabe wird wie bereits erwähnt ebenfalls durch ein Verfahren mit den Merkmalen aus Anspruch 11 gelöst.

Das erfindungsgemäße Verfahren ist vorgesehen und bestimmt zum Heizen einer Komponente in einer Windenergieanlage. Das erfindungsgemäße Verfahren ist gekennzeichnet durch folgende Verfahrensschritte: Erfassen einer Außentemperatur und einer Temperatur der zu beheizenden Komponente der Windenergieanlage. Ferner ist der Verfahrensschritt vorgesehen, einen Einschaltwert für ein Heizmittel der Komponente abhängig von der erfassten Außentemperatur zu bestimmen. Bei dem erfindungsgemäßen Verfahren wird der Einschaltwert derart bestimmt, dass bei einer ersten Außentemperatur der Einschaltwert größer als bei einer zweiten Außentemperatur ist, wenn die zweite Außentemperatur größer als die erste Außentemperatur ist. Schließlich umfasst das erfindungsgemäße Verfahren noch den Verfahrensschritt das Heizmittel einzuschalten, wenn die erfasste Temperatur der Komponente unterhalb der Einschalttemperatur liegt.

Das erfindungsgemäße Verfahren stellt sicher, dass bei einer niedrigen Außentemperatur ein höherer Einschaltwert für das Heizmittel vorgesehen ist. Das erfindungsgemäße Verfahren stellt ferner sicher, dass die Windenergieanlage bei niedriger Außentemperatur die Heizung für die zu überwachende Komponente bei höherer Temperatur der Komponente eingeschaltet als dies bei einer höheren Außentemperatur der Fall wäre. Bevorzugt wird bei dem erfindungsgemäßen Verfahren der Einschaltwert des Heizmittels derart bestimmt, dass in einem vorbestimmten Temperaturintervall die Einschalttemperatur bei zunehmender Außentemperatur abnimmt.

In einer bevorzugten Weiterbildung des erfindungsgemäßen Verfahrens erfolgt die Bestimmung eines Abschaltwerts für das Heizmittel, wobei der Abschaltwert größer als der Einschaltwert bei der jeweils erfassten Außentemperatur ist. Es liegt also bei jeder Außentemperatur ein Abschaltwert vor, der größer als der entsprechende Einschaltwert bei dieser Außentemperatur ist. Das erfindungsgemäße Verfahren sieht in dieser Weiterbildung vor, dass ein Abschalten des Heizmittels erfolgt, wenn die erfasste Temperatur der Komponente oberhalb des Abschaltwerts liegt. Somit erfolgt also eine Zweipunktregelung zwischen dem Einschalt- und dem Abschaltwert für das Heizmittel.

Eine vorteilhafte Weiterbildung des Verfahrens sieht vor, dass der Abschaltwert um eine konstante Temperaturdifferenz größer als der Einschaltwert ist. Der Abschaltwert folgt somit in seiner Abhängigkeit von der Außentemperatur dem Verlauf des Einschaltwerts in dem Temperaturintervall.

In einer bevorzugten Ausgestaltung des erfindungsgemäßen Verfahrens ist vorgesehen, die Temperatur des Schmiermittels in einem Getriebe der Windenergieanlage zu erfassen. Das Getriebe ist eine temperaturkritische Komponente der Windenergieanlage, für die sichergestellt sein muss, dass das Schmiermittel eine geeignete Temperatur besitzt. Ferner wird mit dem erfindungsgemäßen Verfahren sichergestellt, dass bei einer Überwachung durch lediglich einen Temperatursensor die von der Messstelle weiter entfernt liegenden Bereiche des Getriebes nicht zu stark auskühlen. Große Temperaturdifferenzen führen zu einer erhöhten mechanischen Belastung des Getriebes.

Erfindungsgemäß wird der Einschaltwert mindestens abhängig von einer erfassten Außentemperatur innerhalb eines vorbestimmten Temperaturintervalls ermittelt.

Das Intervall für die Außentemperatur erstreckt sich bis zu Temperaturen von -30° C, bevorzugt bis zu -50° C.

Für den Einschaltwert des Heizmittels kann vorgesehen sein, dass dieser sich maximal bis 30° C, bevorzugt bis 50° C erstreckt. Bei unterschiedlichen Auslegungen der Windenergieanlage kann sich das Intervall der Außentemperatur bis -40° C und der Einschaltwert bis +40° C erstrecken. Dabei liegt der maximale Betrag des möglichen Einschaltwerts beim niedrigsten Temperaturwert des Intervalls der Außentemperatur vor.

Die Erfindung wird nachfolgend am Ausführungsbeispiel näher erläutert. Es zeigen:
- Fig. 1: eine schematische Darstellung einer Windenergieanlage
- Fig. 2: eine schematische Darstellung einer Gondel mit einem Getriebe und einem Heizmittel
- Fig. 3: eine von der Außentemperatur abhängige Einschaltschwelle der Ölsumpfheizung in einem Getriebe und
- Fig. 4: eine temperaturabhängige Zweipunktregelung für das Aktivieren oder Deaktivieren des Heizmittels.

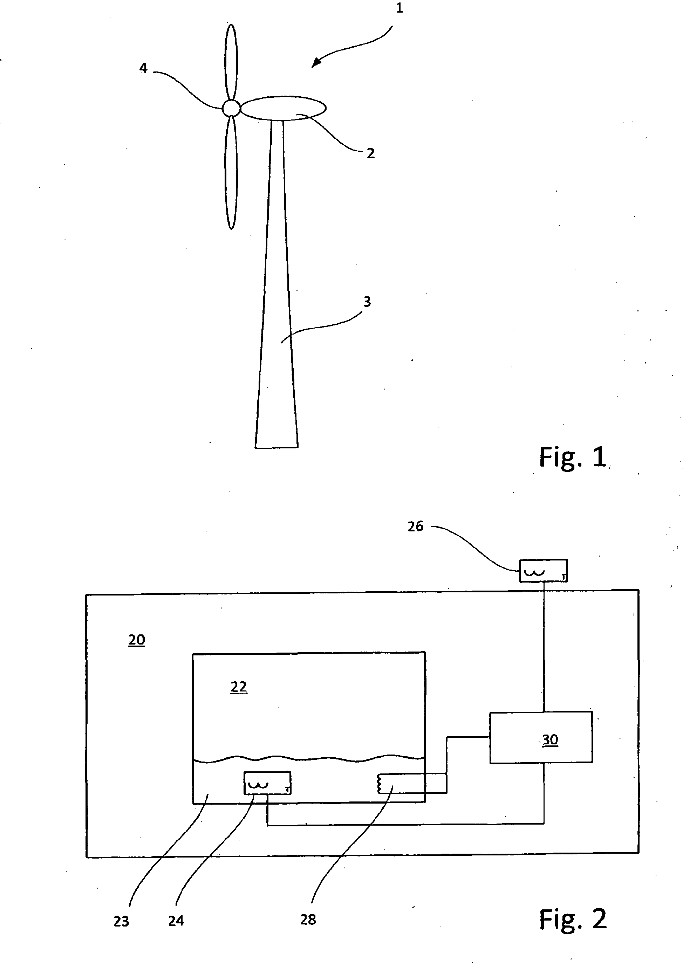

Fig. 1 zeigt eine erfindungsgemäße Windenergieanlage 1 mit einer Gondel 2, einem Rotor 4 und einem Turm 3.

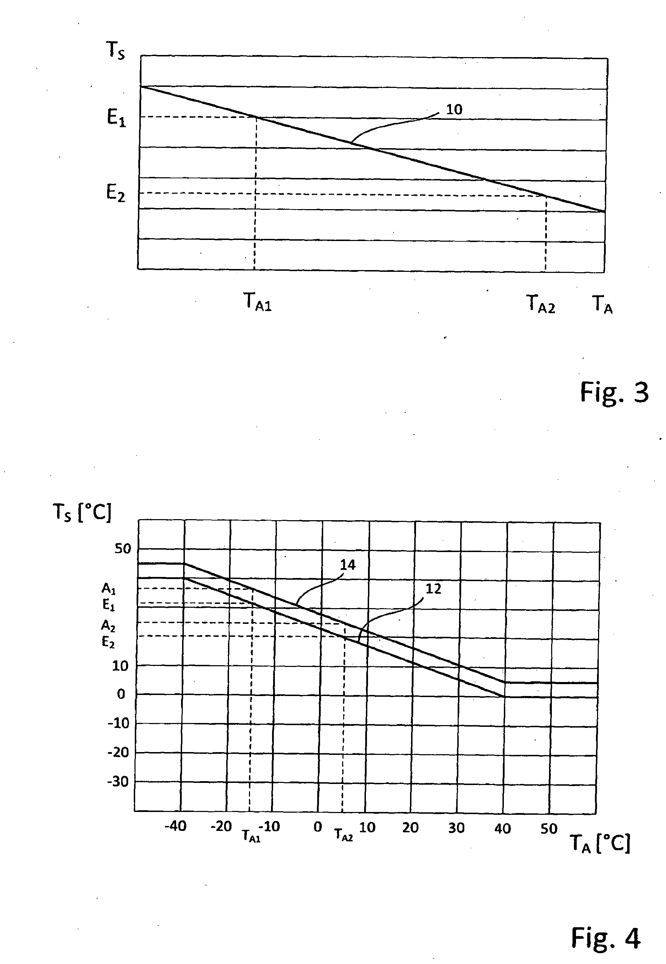

Fig. 2 zeigt eine schematische Darstellung der Gondel 20. In der Gondel 20 ist ein Getriebe mit einen Ölsumpf 23 angeordnet. Das darin befindliche Öl kann durch ein Heizmittel 28 erwärmt werden. Die Temperatur des Ölsumpfes wird durch den Temperaturfühler 24 erfasst. Auf der Gondel 20 befindet sich ein externer Temperatursensor 26 zur Bestimmung der Außentemperatur. Ferner ist in der Gondel 20 eine Heizsteuerung 30 vorgesehen, die mit dem Heizmittel 28 zusammenwirkt. An der Heizsteuerung liegen die erfassten Werte für die Temperatur des Ölsumpfes und für die Außentemperatur als Eingangsgrößen an. Die Heizsteuerung regelt den Betrieb des Heizmittels entsprechend einer in Fig. 3 und Fig. 4 dargestellten Kennlinie.

Fig. 3 zeigt eine Kennlinie 10, die einen Einschaltwert einer elektrischen Ölsumpfheizung in einem Getriebe in einer erfindungsgemäßen Windenergieanlage darstellt. Die Kennlinie 10 ist aufgetragen als eine Ölsumpftemperatur T_{S} über der Außentemperatur T_{A}. Die Kennlinie ist wie folgt zu lesen: Bei einer Außentemperatur T_{A1} liegt ein Einschaltwert E₁ bei der Ölsumpfheizung vor. Dies bedeutet, dass die Ölsumpfheizung eingeschaltet wird, wenn die Temperatur in dem überwachten Ölsumpf unterhalb von E₁ liegt. Bei einem zweiten Wert der Außentemperatur T_{A2} gibt die Kennlinie 10 einen zweiten Einschaltwert E₂ vor, bei dessen Unterschreiten ein Einschalten der Ölsumpfheizung erfolgt. Die Kennlinie 10 ist dadurch gekennzeichnet, dass der Wert E₁ für eine niedrigere Außentemperatur T_{A1} größer ist als der Wert E₂ für eine höhere Außentemperatur T_{A2}. Es wird also die Ölsumpfheizung einer Windenergieanlage, die einer niedrigen Außentemperatur beispielsweise im Bereich von T_{A1} ausgesetzt ist, bei deutlich höheren Temperaturen des Ölsumpfs eingeschaltet. Selbst wenn der Einschaltwert deutlich über dem für den Betrieb des Getriebes notwendigen Temperaturwert liegt, wird durch den höheren Einschaltwert E₁ sichergestellt, dass das Getriebe insbesondere in seinen Randbereichen nicht zu stark abkühlt und daher ein zu großer Temperaturgradient in dem Getriebe auftritt.

Fig. 4 zeigt eine Weiterbildung der in Fig. 3 beschriebenen Kennlinie 10. Dargestellt ist abhängig von der Außentemperatur T_{A} eine Kennlinie 12 für die Einschaltwerte und eine Kennlinie 14 für die Abschaltwerte der Ölsumpfheizung. Das Diagramm der Kennlinien 12 und 14 ist so zu lesen, dass bei einer Außentemperatur T_{A1} ein Einschaltwert E₁ der Kennlinie 12 vorgegeben wird und ein Abschaltwert A₁ für die Kennlinie 14. Fällt also bei einer Temperatur T_{A1} die Temperatur des Ölsumpfs auf eine Temperatur unterhalb des Wertes E₁, erfolgt ein Aufheizen des Ölsumpfs. Mit steigender Temperatur des Ölsumpfs wird der Heizvorgang fortgesetzt, selbst wenn der Einschaltwert E₁ überschritten wird. Ein Ausschalten der Heizung erfolgt bei einem Temperaturwert A₁, der im vorgestellten Beispiel ungefähr 5° C größer als der Einschaltwert ist.

Entsprechend sind die Werte E₂ und A₂ für die Temperatur T_{A2} zu verstehen.

Die in Fig. 4 dargestellten Kennlinien sind beispielhaft mit Einheiten versehen. Hier ist zu entnehmen, dass beispielsweise bei einer Außentemperatur T_{A} von -30 °C ein Aufheizen des Ölsumpfs bis zu 40 °C erfolgt. Dies bedeutet, dass der Ölsumpf auf eine deutlich höhere Temperatur als für den Betrieb des Getriebes notwendig erwärmt wird. Die Temperatur stellt sicher, dass das Getriebe, das in seinem Außenbereich der Temperatur von -30 °C ausgesetzt ist, nicht auskühlt und zu starke Temperaturgradienten entwickelt, die für den Betrieb der Windenergieanlage nachteilig sind. Bei einer Außentemperatur von 5 °C wird der Ölsumpf des Getriebes dagegen nur auf eine Temperatur von 25 °C erwärmt.

### Bezugszeichen

- 1: Windenergieanlage
- 2: Gondel
- 3: Turm
- 4: Rotor

- 10: Kennlinie
- 12: Kennlinie
- 14: Kennlinie

- 20: Gondel
- 22: Getriebe
- 23: Ölsumpf
- 24: Temperaturfühler
- 26: externer Temperatursensor
- 28: Heizmittel
- 30: Heizsteuerung

## Patentansprüche

1. Windenergieanlage (1), in der mindestens eine Komponente mit einem ersten Temperatursensor (24) zur Erfassung einer Temperatur (T_{S})der Komponente ausgestattet ist und einem zweiten Temperatursensor (26), der eine Außentemperatur (T_{A}, T_{A1}, T_{A2}) erfasst, einem Heizmittel (28), das der mindestens einen Komponente zugeordnet ist, um diese zu beheizen, und einer Heizsteuerung (30), an der die erfasste Temperatur (T_{S}) der Komponente und die erfasste Außentemperatur (T_{A}, T_{A1}, T_{A2}) als Eingangsgrößen anliegen und die das Heizmittel (28) für ein Beheizen ansteuert, wenn die erfasste Temperatur (T_{S}) der Komponente unterhalb eines vorbestimmten Einschaltwerts (E₁, E₂) für das Heizmittel (28) liegt,
**dadurch gekennzeichnet, dass** der Einschaltwert (E₁, E₂) für das Heizmittel (28) mindestens in einem vorbestimmten Temperaturintervall abhängig von der erfassten Außentemperatur (T_{A}, T_{A1}, T_{A2}) ist, wobei in dem mindestens einen Temperaturintervall der Einschaltwert (E₁) bei einer ersten Außentemperatur (T_{A1}) größer als der Einschaltwert (E₂) bei einer zweiten Außentemperatur (T_{A2}) ist, wenn die zweite Außentemperatur (T_{A2}) größer als die erste Außentemperatur (T_{A1})ist.

2. Windenergieanlage (1) nach Anspruch 1, **dadurch gekennzeichnet, dass** die Windenergieanlage (1) eine Gondel (2, 20) aufweist, in der sich die mindestens eine Komponente befindet und die Außentemperatur innerhalb oder außerhalb der Gondel (2, 20) erfasst wird.

3. Windenergieanlage (1) nach Anspruch 1 oder 2, **dadurch gekennzeichnet, dass** innerhalb des vorbestimmten Temperaturintervalls jeder erste Einschaltwert (E₁) bei einer ersten Außentemperatur (T_{A1}) größer als jeder zweite Einschaltwert (E₂) bei einer zweiten Außentemperatur (T_{A2}) ist, wenn die zweite Außentemperatur (T_{A2}) größer als die erste Außentemperatur (T_{A1}) ist.

4. Windenergieanlage (1) nach einem der Ansprüche 1 bis 3, **dadurch gekennzeichnet, dass** die Heizsteuerung (30) das Heizmittel (28) ausschaltet, wenn die erfasste Temperatur (T_{S}) der Komponente oberhalb eines vorbestimmten Abschaltwerts (A₁, A₂) für das Heizmittel (28) liegt, wobei der Abschaltwert (A₁, A₂) stets größer als der Einschaltwert (E₁, E₂) zu der jeweils erfassten Außentemperatur (T_{A}, T_{A1}, T_{A2}) ist.

5. Windenergieanlage (1) nach Anspruch 4, **dadurch gekennzeichnet, dass** bei jeder Außentemperatur (T_{A}, T_{A1}, T_{A2}) in dem Temperaturintervall der Abschaltwert (A₁, A₂) um eine konstante Temperaturdifferenz größer als der Einschaltwert (E₁, E₂) ist.

6. Windenergieanlage (1) nach Anspruch 5, **dadurch gekennzeichnet, dass** die Temperaturdifferenz im Intervall von 2 K bis 15 K ausgewählt ist.

7. Windenergieanlage (1) nach einem der Ansprüche 1 bis 6, **dadurch gekennzeichnet, dass** die Komponente der Windenergieanlage (1) ein Getriebe ist.

8. Windenergieanlage (1) nach Anspruch 7, **dadurch gekennzeichnet, dass** der erste Temperatursensor (24) für die Temperatur der Komponente die Temperatur (T_{S}) eines Schmiermittels in dem Getriebe erfasst.

9. Windenergieanlage (1) nach einem der Ansprüche 1 bis 8, **dadurch gekennzeichnet, dass** genau ein Temperatursensor (24) für die Komponente vorgesehen ist.

10. Windenergieanlage (1) nach einem der Ansprüche 1 bis 9, **dadurch gekennzeichnet, dass** sich das Intervall für die Außentemperatur bis -30° C, bevorzugt bis -50° C erstreckt.

11. Windenergieanlage (1) nach einem der Ansprüche 1 bis 10, **dadurch gekennzeichnet, dass** der Einschaltwert (E₁, E₂) der Temperatur für das Heizmittel (28) maximal 30° C, bevorzugt maximal 50° C beträgt.

12. Verfahren zum Heizen einer Komponente in einer Windenergieanlage, mit folgenden Verfahrensschritten:
- Erfassen einer Temperatur (T_{S}) der Komponente der Windenergieanlage (1),
- Erfassen einer Außentemperatur (T_{A}, T_{A1}, T_{A2}),
- Bestimmen eines Einschaltwerts (E₁, E₂) für ein Heizmittel (28) der Komponente mindestens in einem vorbestimmten Temperaturintervall, abhängig von der erfassten Außentemperatur (T_{A}, T_{A1}, T_{A2}), und
- Einschalten der Heizung (28), wenn die erfasste Temperatur (T_{S}) der Komponente unterhalb eines Einschaltwerts (E₁, E₂) liegt
wobei
- beim Bestimmen des Einschaltwerts (E₁, E₂) in Abhängigkeit von der erfassten Außentemperatur (T_{A}, T_{A1}, T_{A2}) der Einschaltwert (E₁) bei einer ersten Außentemperatur (T_{A1}) größer als bei einer zweiten Außentemperatur (T_{A2}) ist, wenn die zweite Außentemperatur (T_{A2}) größer als die erste Außentemperatur (T_{A1}) ist.

13. Verfahren nach Anspruch 12, **gekennzeichnet durch**:
- Bestimmen des Einschaltwerts (E₁, E₂) des Heizmittels (28) derart, dass dieser in einem vorbestimmten Temperaturintervall mit zunehmender Außentemperatur (T_{A}, T_{A1}, T_{A2}) abnimmt.

14. Verfahren nach Anspruch 12 oder 13 **gekennzeichnet durch**:
- Bestimmen eines Abschaltwerts (A₁, A₂) für das Heizmittel (28) derart, dass der Abschaltwert (A₁, A₂) größer als der Einschaltwert (E₁, E₂) bei der erfassten Außentemperatur (T_{A}, T_{A1}, T_{A2}) ist, und
- Abschalten des Heizmittels (28), wenn die erfasste Temperatur (T_{S}) der Komponente oberhalb des Abschaltwerts (A₁, A₂) liegt.

15. Verfahren nach Anspruch 14, **gekennzeichnet durch**
- Bestimmen des Abschaltwerts (A₁, A₂), der um eine konstante Temperaturdifferenz größer als der Einschaltwert (E₁, E₂) ist.

16. Verfahren nach Anspruch 15, **dadurch gekennzeichnet, dass** die Temperaturdifferenz einen Wert zwischen 2 K und 15 K aufweist.

17. Verfahren nach einem der Ansprüche 12 bis 16, **gekennzeichnet durch**
- Erfassen der Temperatur (T_{S}) eines Schmiermittels eines Getriebes der Windenergieanlage (1).

18. Verfahren nach einem der Ansprüche 12 bis 17, **dadurch gekennzeichnet, dass** das Intervall für die Außentemperatur (T_{A}, T_{A1}, T_{A2}) sich bis -30° C, bevorzugt bis -50° C erstreckt.

19. Verfahren nach einem der Ansprüche 12 bis 18, **dadurch gekennzeichnet, dass** der Einschaltwert (E₁, E₂) sich bis zu 30° C, bevorzugt bis zu 50° C erstreckt.

## Claims

1. A wind turbine (1) comprising at least one component provided with a first temperature sensor (24) for detecting a temperature (T_{S}) of the component and a second temperature sensor (26) for detecting a outside temperature (T_{A}, T_{A1}, T_{A2}), a heater (28) associated with the component in order to heat the component and a heater controller (30), the first and second temperature sensors being connected to the heater controller for applying first and second input quantities thereto, in order to activate the heater (28) when the detected temperature (T_{S}) of the component lies below a predetermined switch-on value (E₁, E₂) for the heater (28),
wherein the switch-on value (E₁, E₂) for the heater (28) depends in at least one predetermined temperature interval on the outside temperature (T_{A,} T_{A1}, T_{A2}) and, within the at least one predetermined temperature interval, the switch-on value (E₁) at a first value of the outside temperature (T_{A1}) is greater than the switch-on value (E₂) at a second value of the outside temperature (TA₂₎ when the second value of the outside temperature (T_{A2}) is greater than the first value of the outside temperature (T_{A1}).

2. The wind turbine of claim 1, wherein the wind turbine (1) comprises a nacelle (2, 20) in which the at least one component is arranged and the outside temperature is detected inside or outside of the nacelle (2, 20).

3. The wind turbine of one of the claims 1 or 2, wherein inside a predetermined temperature interval, each first switch-on value (E₁) at a first value of the outside temperature (T_{A1}) is greater than each switch-on value (E₂) at a second value of the outside temperature (T_{A2}) when the second value of the outside temperature (T_{A2}) is greater than the first value of the outside temperature (T_{A1}).

4. The wind turbine of one of the claims 1 to 3, wherein the heater controller (30) is configured to switch off the heater (28) when the detected temperature (T_{S}) of the component lies above a predetermined switch-off value (A₁, A₂) for the heater (28); and, the switch-off value (A₁, A₂) is always greater than the switch-on value (E₁, E₂) at the detected outside temperature (T_{A}, T_{A1}, T_{A2}) corresponding thereto.

5. The wind turbine of claim 4, wherein the switch-off value (A₁, A₂) is greater than the switch-on value (E₁, E₂) by a constant temperature difference for every outside temperature (T_{A}, T_{A1}, T_{A2}) in the temperature interval.

6. The wind turbine of claim 5, wherein the temperature difference is selected to be in the interval from 2 K to 15 K.

7. The wind turbine of one of the claims 1 to 6, wherein the component of the wind turbine (1) is a transmission.

8. The wind turbine of claim 7, wherein the first temperature sensor (24) for the temperature of the component detects the temperature (T_{S}) of a lubricant in the transmission.

9. The wind turbine of one of the claims 1 to 8, wherein precisely one temperature sensor (24) is provided for the component.

10. The wind turbine of one of the claims 1 to 9, wherein the interval for the outside temperature extends down to -30°C, preferred down to -50°C.

11. The wind turbine of claim 1, wherein the switch-on value (E₁, E₂) of the temperature for the heater is at most 30°C, preferred at most 50°C.

12. A method for heating a component in a wind turbine, the method comprising the steps of:
- detecting a temperature (T_{S}) of the component of the wind turbine (1);
- detecting an outside temperature (T_{A}, T_{A1}, T_{A2});
- determining a switch-on value (E₁, E₂) for a heater of the component at least in a predetermined temperature interval, depending on the detected outside temperature (T_{A}, T_{A1}, T_{A2}), and
- switching on the heater (28) when the detected temperature (T_{S}) of the component is below a switch-on value (E₁, E₂),
wherein
- when determining the switch-on value (E₁, E₂) depending on the detected outside temperature (T_{A}, T_{A1}, T_{A2}), the switch-on value (E₁) for a first outside temperature (T_{A1}) is greater than the switch-on value (E₂) for a second outside temperature (T_{A2}) when the second outside temperature (T_{A2}) is greater than the first outside temperature (T_{A1}).

13. The method of claim 12, comprising the further step of:
- determining the switch-on value (E₁, E₂) of the heater (28) such that this switch-on value decreases in a predetermined temperature interval as the outside temperature (T_{A}, T_{A1}, T_{A2}) rises.

14. The method of claim 12 or 13, comprising the further steps of:
- determining a switch-off value (A₁, A₂) for the heater (28) such that the switch-off value (A₁, A₂) is greater than the switch-on value (E₁, E₂) for the detected outside temperature (T_{A}, T_{A1}, T_{A2}); and,
- switching off the heater (28) when the detected temperature (T_{S}) of the component is above the switch-off value (A₁, A₂).

15. The method of claim 14, comprising the further step of:
- determining the switch-off value (A₁, A₂) such that the switch-off value is greater than the switch-on value (E₁, E₂) by a constant temperature difference.

16. The method of claim 15, wherein the temperature difference has a value between 2 K and 15 K.

17. The method of one of the claims 12 to 16, comprising the further step of:
- detecting the temperature (T_{S}) of a lubricant of a transmission of the wind turbine (1).

18. The method of one of the claims 12 to 17, wherein the interval of the outside temperature (T_{A}, T_{A1}, T_{A2}) extends down to -30°C, preferred down to -50°C.

19. The method of one of the claims 12 to 18, wherein the switch-on value (E₁, E₂) extends up to 30°C, preferred up to 50°C.

## Revendications

1. Éolienne (1), dans laquelle au moins un composant est équipé d'un premier capteur de température (24) pour la détection d'une température (Tₛ) du composant et d'un deuxième capteur de température (26) qui détecte une température extérieure (T_{A}, T_{A1}, T_{A2}), d'un moyen de chauffage (28) associé à l'au moins un composant afin de le chauffer, et d'une commande de chauffage (30) à laquelle sont appliquées la température détectée (Tₛ) du composant et la température extérieure (T_{A}, T_{A1}, T_{A2}) détectée comme grandeurs d'entrée et qui active le moyen de chauffage (28) pour un chauffage quand la température détectée (T_{S}) du composant est au-dessous d'une valeur d'activation (E₁, E₂) prédéterminée pour le moyen de chauffage (28), **caractérisé en ce que** la valeur d'activation (E₁, E₂) pour le moyen de chauffage (28) dépend, au moins dans un intervalle de température prédéterminé, de la température extérieure (T_{A}, T_{A1}, T_{A2}) détectée, dans l'au moins un intervalle de température la valeur d'activation (E₁) chez une première température extérieure (T_{A1}) étant plus grande que la valeur d'activation (E₂) chez une deuxième température extérieure (T_{A2}) pour autant que la deuxième température extérieure (T_{A2}) est plus haute que la première température extérieure (T_{A1}).

2. Éolienne (1) selon la revendication 1, **caractérisée en ce que** l'éolienne (1) comporte une nacelle (2, 20), dans laquelle se trouve l'au moins un composant, et la température extérieure dans ou en dehors de la nacelle (2, 20) est détectée.

3. Éolienne (1) selon la revendication 1 ou 2, **caractérisée en ce que** dans l'intervalle de température prédéterminé, chaque première valeur d'activation (E₁) chez une première température extérieure (T_{A1}) est plus grande que chaque deuxième valeur d'activation (E₂) chez une deuxième température extérieure (T_{A2}) pour autant que la deuxième température extérieure (T_{A2}) est plus haute que la première température extérieure (T_{A1})_{·}

4. Éolienne (1) selon l'une quelconque des revendications 1 à 3, **caractérisée en ce que** la commande de chauffage (30) déclenche le moyen de chauffage (28) quand la température détectée (T_{S}) du composant est au-dessus d'une valeur d'arrêt prédéterminée (A₁, A₂) pour le moyen de chauffage, la valeur d'arrêt (A₁, A₂) toujours étant plus grande que la valeur d'activation (E₁, E₂) chez la respective température extérieure (T_{A}, T_{A1}, T_{A2}) détectée.

5. Éolienne (1) selon la revendication 4, **caractérisée en ce que** chez chaque température extérieure (T_{A}, T_{A1}, T_{A2}) dans l'intervalle de température, la valeur d'arrêt (A₁, A₂) est plus grande pour une différence de température constante que la valeur d'activation (E₁, E₂).

6. Éolienne (1) selon la revendication 5, **caractérisée en ce que** la différence de température dans l'intervalle est sélectionnée de 2 K à 15 K.

7. Éolienne (1) selon l'une quelconque des revendications 1 à 6, **caractérisée en ce que** le composant de l'éolienne (1) est un engrenage.

8. Éolienne (1) selon la revendication 7, **caractérisée en ce que** le premier capteur de température (24) pour la température du composant détecte la température (T_{S}) d'un lubrifiant dans l'engrenage.

9. Éolienne (1) selon l'une quelconque des revendications 1 à 8, **caractérisée en ce qu'**exactement un seul capteur de température (24) est pourvu pour le composant.

10. Éolienne (1) selon l'une quelconque des revendications 1 à 9, **caractérisée en ce que** l'intervalle pour la température extérieure s'étend jusqu'à -30° C, de préférence jusqu'à -50° C.

11. Éolienne (1) selon l'une quelconque des revendications 1 à 10, **caractérisée en ce que** la valeur d'activation (E₁, E₂) de la température pour le moyen de chauffage (28) est au maximum 30° C, de préférence au maximum 50° C.

12. Procédé de chauffage d'un composant dans une éolienne, avec les étapes suivantes:
• détection d'une température (T_{S}) du composant de l'éolienne (1),
• détection d'une température extérieure (T_{A}, T_{A1}, T_{A2}),
• détermination d'une valeur d'activation (E₁, E₂) pour un moyen de chauffage (28) du composant au moins dans un intervalle de température prédéterminé, en fonction de la température extérieure (T_{A}, T_{A1}, T_{A2}) détectée, et
• activation du chauffage (28), quand la température détectée (T_{S}) du composant est au-dessous d'une valeur d'activation (E₁, E₂),
• dans la détermination de la valeur d'activation (E₁, E₂) en fonction de la température extérieure (T_{A}, T_{A1}, T_{A2}) détectée, la valeur d'activation (E₁) dans une première température extérieure (T_{A1}) étant plus grande que dans une deuxième température extérieure (T_{A2}) quand la deuxième température extérieure (T_{A2}) est plus haute que la première température extérieure (T_{A1}).

13. Procédé selon la revendication 12, **caractérisé par**:
• détermination de la valeur d'activation (E₁, E₂) du moyen de chauffage (28) tellement que celle-ci décroît dans un intervalle de température prédéterminé avec température extérieure (T_{A}, T_{A1}, T_{A2}) croissante.

14. Procédé selon la revendication 12 ou 13, **caractérisé par**:
• détermination d'une valeur d'arrêt (A₁, A₂) pour le moyen de chauffage (28) tellement que la valeur d'arrêt (A₁, A₂) est plus grande que la valeur d'activation (E₁, E₂) dans la température extérieure (T_{A}, T_{A1}, T_{A2}) détectée, et
• arrêter le moyen de chauffage (28) quand la température détectée (T_{S}) du composant est au-dessus de la valeur d'arrêt (A₁, A₂).

15. Procédé selon la revendication 14, **caractérisé par**:
• détermination de la valeur d'arrêt (A₁, A₂), qui est plus grande pour une différence de température constante que la valeur d'activation (E₁, E₂).

16. Procédé selon la revendication 15, **caractérisé en ce que** la différence de température a une valeur entre 2 K et 15 K.

17. Procédé selon l'une quelconque des revendications 12 à 16, **caractérisé par**
• détection de la température (T_{S}) d'un lubrifiant d'un engrenage de l'éolienne (1).

18. Procédé selon l'une quelconque des revendications 12 à 17, **caractérisé en ce que** l'intervalle pour la température extérieure (T_{A}, T_{A1}, T_{A2}) s'étend jusqu'à -30° C, de préférence jusqu'à -50° C.

19. Procédé selon l'une quelconque des revendications 12 à 18, **caractérisé en ce que** la valeur d'activation (E₁, E₂) s'étend jusqu'à 30° C, de préférence jusqu'à 50° C.
